# EUROPEAN PATENT APPLICATION

(11) **EP 3 132 949 A1**
(43) Date of publication of application: **22.02.2017**
(21) Application number: 16180488.5
(22) Date of filing: 21.07.2016
(51) Int. Cl.: B60C 15/024, B60C 15/06, B60C 15/04

(54) **PNEUMATIC TIRE**

(30) Priority: 12.08.2015 JP 2015159290
(71) Applicant: SUMITOMO RUBBER INDUSTRIES LIMITED, Kobe-shi, Hyogo-ken (JP)
(72) Inventor: ITO, Tadashi, Kobe-shi, Hyogo 651-0072 (JP)
(74) Representative: Manitz, Finsterwald & Partner GbR

(57) **Abstract**

A tire (2) of the present invention includes a pair of fillers (20) turned up around beads (10). Each filler (20) has multiple cords made of steel and aligned with each other. In the tire (2), an outer surface of a chafer (8) has a bottom surface (26) that contacts with a seat surface of a rim (30). When a reference line (M) represents a straight line that contacts with the bottom surface (26) in a cross-section obtained by cutting the tire at the plane perpendicular to the circumferential direction, the bottom surface (26) has a depression (66) that is shaped so as to project radially outward of the reference line (M). A ratio (D/L) of a maximum depth (D) of the depression (66) to a width L of the depression (66) is greater than or equal to 0.007 and not greater than 0.060.

## Description

This application claims priority on Patent Application No. 2015-159290 filed in JAPAN on August 12, 2015. The entire contents of this Japanese Patent Application are hereby incorporated by reference.

### BACKGROUND OF THE INVENTION

### Field of the Invention

The present invention relates to pneumatic tires. More specifically, the present invention relates to heavy duty pneumatic tires that are to be mounted to vehicles such as trucks, buses, and the like.

### Description of the Related Art

In a tire, bead portions are fitted into a rim. In a running state, the bead portions are under a heavy load. The bead portions are required to have durability for withstanding the load.

The rim is fastened by the beads that are fitted into the rim. In order to prevent a tire from slipping on a rim, that is, prevent "slip on rim", fastening force of the beads is required to be enhanced. Meanwhile, in order to easily mount the tire on the rim, a pressure at which the beads are fitted into the rim is required to be reduced. A tire that allows both prevention of slip on rim and easy mounting of the tire on the rim (that is, fittability is excellent) is required.

When a tire is fitted into a rim, the bottom surface of a bead portion contacts with a seat surface of the rim, and a part of the side surface of the bead portion contacts with a flange of the rim. In general, the shape of the bottom surface of the bead portion matches the shape of the seat surface. The shape of the side surface of the bead portion matches the shape of the flange.

Study has been made for, for example, improving durability, preventing slip on rim, and improving fittability by adjusting shapes of the bottom surface and the side surface of the bead portion. An example of the study is disclosed in JP5-193312. In the tire, a recessed groove is formed in the bottom surface (referred to as a bead base portion) of the bead portion.

In a heavy duty pneumatic tire mounted to a vehicle such as a truck or a bus, particularly heavy load is applied to the bead portions as compared to a standard tire. In order to withstand the load, in the heavy duty tire, the beads include cores having hexagonal cross-sections in many cases. Further, in order to reinforce the bead portions, the tire sometimes includes fillers (also referred to as steel fillers) having multiple steel cords. The fillers are turned up around the cores.

When the bead portions are fitted into the rim, the bead portions are moved over the flanges of the rim. At this time, great force is applied to the bead portions. The fillers are sandwiched between the rim, and the cores each having the hexagonal cross-section. Thus, the filler may be bent. When the filler is bent, "waving" is caused by the bottom surface of the bead portion being deformed so as to be wavy. This may cause poor appearance. For the heavy duty tires, used tires are usually reused by replacing the treads. The tire having the waving generated therein may not be reused. Study has not been sufficiently made for preventing the waving.

The rubber of the bottom surface of the bead portion may have an increased thickness in order to prevent the waving. When the thickness of the rubber of the bottom surface is increased, the inner diameter (the inner diameter of an annular shape formed by the bottom surface of the bead portion) of the bead portion is reduced. In this case, force for fitting the bead portions into the rim is enhanced. Thus, an efficiency of work for fitting the tire into the rim is reduced. This reduces fittability. Further, when the bead portions are fitted into the rim, the end portion of the bottom surface of the bead portion may be chipped.

The inner diameter of the bead core may be increased in order to prevent the waving. In this case, force with which the rim is fastened by the beads is reduced. This may cause slip on rim.

An object of the present invention is to provide a pneumatic tire that allows a good fittability and resistance to slip on rim to be obtained, and also allows generation of waving to be inhibited.

### SUMMARY OF THE INVENTION

A heavy duty pneumatic tire according to the present invention includes: a pair of beads; a pair of fillers turned up around the beads, respectively; and a pair of chafers disposed axially outward of the beads, and having radially inner side portions extending radially inward of the beads. Each bead includes a core. A cross-section obtained by cutting the core at a plane perpendicular to a circumferential direction, is hexagonal. Each filler has multiple cords made of steel and aligned with each other. An outer surface of each chafer has a bottom surface that contacts with a seat surface of a rim when the tire is mounted on the rim, and a side surface that contacts with a flange of the rim when the tire is mounted on the rim. When a reference line M represents a straight line that contacts with the bottom surface in a cross-section obtained by cutting the tire at the plane perpendicular to the circumferential direction, the bottom surface has a depression that is shaped so as to project radially outward of the reference line M. A ratio (D/L) of a maximum depth D of the depression to a width L of the depression is greater than or equal to 0.007 and not greater than 0.060.

The inventors of the present invention have made study for a structure of a bead portion for a tire including steel fillers, and cores each having a hexagonal cross-section, in order to prevent waving. As a result, it has been found that, when the bottom surface (bottom surface of a bead portion) of a chafer has a depression, and the width and the depth of the depression are appropriately adjusted, waving is effectively inhibited.

In the tire according to the present invention, the bottom surface of the chafer has the depression. A ratio (D/L) of the maximum depth D of the depression to the width L of the depression is greater than or equal to 0.007 and not greater than 0.060. The depression allows force for moving the bead portion over a flange of a rim to be effectively reduced. This inhibits bending of the filler. In the tire, waving of the bottom surface is inhibited. In the tire, since the force for moving the bead portion over the flange of the rim is reduced, the bead portions can be easily fitted into the rim. Further, in the tire, the thickness of the rubber of the bottom surface portion need not be increased for inhibiting waving. In the tire, fittability is excellent. In the tire, the inner diameter of the core of the bead need not be increased for inhibiting waving. In the tire, resistance to slip on rim is advantageously maintained.

Preferably, a ratio (L/W) of the width L to a width W of the core is greater than or equal to 0.8.

Preferably, a perpendicular line that is drawn from an axially inner end of the core to the reference line M intersects the reference line M between both ends of the depression.

Preferably, an absolute value α of an angle of each cord of the fillers relative to the circumferential direction is greater than or equal to 20° and not greater than 70°.

Preferably, a hardness Hs of the chafers is higher than or equal to 65 and not higher than 85.

### BRIEF DESCRIPTION OF THE DRAWINGS

FIG. 1 is a cross-sectional view of a part of a tire according to one embodiment of the present invention; and
FIG. 2 is an enlarged cross-sectional view of a part of the tire shown in FIG. 1.

### DESCRIPTION OF THE PREFERRED EMBODIMENTS

The following will describe in detail the present invention based on preferred embodiments with reference to the accompanying drawing.

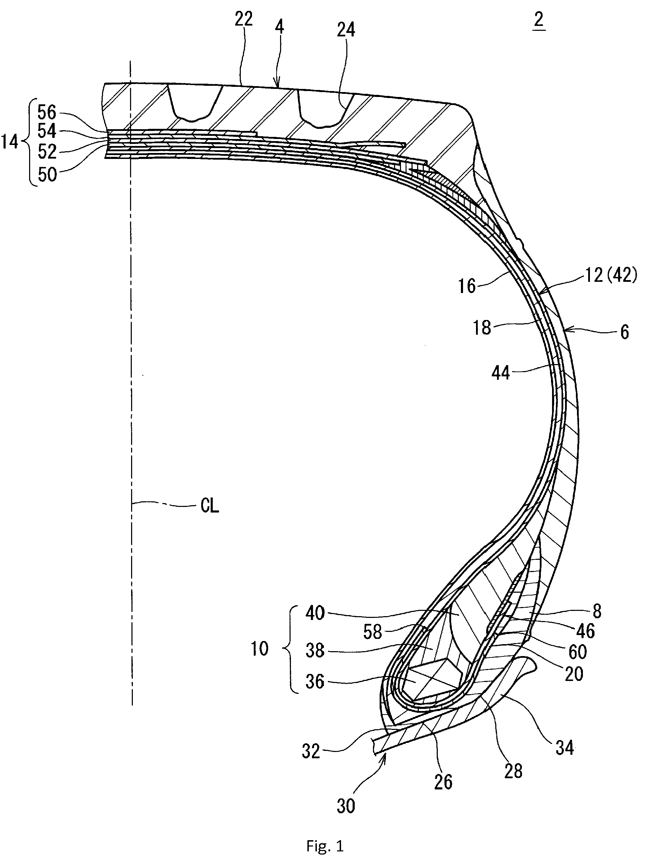

FIG. 1 shows a pneumatic tire 2. In FIG. 1, the up-down direction represents the radial direction of the tire 2, the left-right direction represents the axial direction of the tire 2, and the direction perpendicular to the surface of the drawing sheet represents the circumferential direction of the tire 2. In FIG. 1, an alternate long and short dash line CL represents the equator plane of the tire 2. The tire 2 has a shape which is symmetric with respect to the equator plane except for a tread pattern.

The tire 2 includes a tread 4, a pair of sidewalls 6, a pair of chafers 8, a pair of beads 10, a carcass 12, a belt 14, an inner liner 16, an insulation 18, and a pair of fillers 20. The tire 2 is of a tubeless type. The tire 2 is mounted to trucks, buses, or the like. The tire 2 is a heavy duty pneumatic tire 2. In FIG. 1, the tire 2 is mounted on a rim 30.

The tread 4 has a shape that projects radially outward. The tread 4 forms a tread surface 22 that can contact with a road surface. The tread surface 22 has grooves 24 formed therein. A tread pattern is formed by the grooves 24. The tread 4 includes a base layer and a cap layer, which are not shown. The cap layer is disposed radially outward of the base layer. The cap layer is layered over the base layer. The base layer is formed of a crosslinked rubber which is excellent in adhesiveness. A typical base rubber of the base layer is a natural rubber. The cap layer is formed of a crosslinked rubber which is excellent in wear resistance, heat resistance, and grip performance.

The sidewalls 6 extend almost inward from ends, respectively, of the tread 4 in the radial direction. The radially outer side ends of the sidewalls 6 are jointed to the tread 4. The radially inner side ends of the sidewalls 6 are joined to the chafers 8. The sidewalls 6 are formed of a crosslinked rubber which is excellent in cut resistance and weather resistance. The sidewalls 6 prevent the carcass 12 from being damaged.

The chafers 8 are disposed almost inward of the sidewalls 6, respectively, in the radial direction. The chafers 8 are disposed axially outward of the beads 10 and the carcass 12. The inner side portions of the chafers 8 extend radially inward of the beads 10. The outer surface of each chafer 8 includes a bottom surface 26 and a side surface 28. The bottom surface 26 contacts with a seat surface 32 of the rim 30 when the tire 2 is mounted on the rim 30. The bottom surface 26 is also referred to as a bead base portion. A part of the side surface 28 contacts with a flange 34 of the rim 30 when the tire 2 is mounted on the rim 30. By the contact, portions near the beads 10 are protected.

The beads 10 are disposed radially inward of the sidewalls 6, respectively. Each bead 10 includes: a core 36; an apex 38 that extends radially outward from the core 36; and a packing rubber 40 that extends radially outward from the apex 38. The core 36 is ring-shaped. The core 36 includes a non-stretchable wound wire. The apex 38 is tapered radially outward. The apex 38 is formed of a highly hard crosslinked rubber. The packing rubber 40 is tapered radially outward. The packing rubber 40 is flexible. The packing rubber 40 reduces concentration of stress on the end of the carcass 12.

The carcass 12 includes a carcass ply 42. The carcass ply 42 is extended on and between the beads 10 on both sides, along the inner sides of the tread 4 and the sidewalls 6. The carcass ply 42 is turned up around the cores 36 from the inner side toward the outer side in the axial direction. By the carcass ply 42 being turned up, the carcass ply 42 includes a main portion 44 and turned-up portions 46.

The carcass ply 42 includes multiple cords aligned with each other, and a topping rubber, which are not shown. An absolute value of an angle of each cord relative to the equator plane is 75° to 90°. In other words, the carcass 12 forms a radial structure. The cords are formed of steel. The carcass 12 may be formed of two or more carcass plies 42.

The belt 14 extends in the axial direction on a cross-section obtained by cutting the tire 2 at a plane perpendicular to the circumferential direction. The belt 14 is disposed radially inward of the tread 4. The belt 14 is disposed radially outward of the carcass 12. The belt 14 reinforces the carcass 12. In the tire 2, the belt 14 includes a first layer 50, a second layer 52, a third layer 54, and a fourth layer 56. The belt 14 may be formed by the first layer, the second layer, and the third layer. The belt 14 may be formed by the first layer and the second layer.

Each of the first layer 50, the second layer 52, the third layer 54, and the fourth layer 56 includes multiple cords aligned with each other, and a topping rubber, which are not shown. Each cord is tilted relative to the equator plane. A direction in which each cord of the second layer 52 is tilted relative to the equator plane is the same as a direction in which each cord of the first layer 50 is tilted relative to the equator plane. A direction in which each cord of the third layer 54 is tilted relative to the equator plane is opposite to the direction in which each cord of the second layer 52 is tilted relative to the equator plane. A direction in which each cord of the fourth layer 56 is tilted relative to the equator plane is the same as the direction in which each cord of the third layer 54 is tilted relative to the equator plane. In each layer, an absolute value of the angle of the cord relative to the equator plane is 15° to 70°. A material of the cords is steel. That is, the belt 14 includes steel cords.

The inner liner 16 forms the inner surface of the tire 2. The inner liner 16 is formed of a crosslinked rubber. A rubber excellent in airtightness is used for the inner liner 16. A typical base rubber of the inner liner 16 is isobutylene-isoprene-rubber or halogenated isobutylene-isoprene-rubber. The inner liner 16 functions so as to maintain an internal pressure of the tire 2.

The insulation 18 is disposed outward of the inner liner 16. The insulation 18 is disposed inward of the carcass 12. The insulation 18 is sandwiched between the carcass 12 and the inner liner 16. The insulation 18 is formed of a crosslinked rubber excellent in adhesiveness. The insulation 18 is firmly joined to the carcass 12, and is also firmly joined to the inner liner 16. The insulation 18 allows separation of the inner liner 16 from the carcass 12 to be inhibited.

The fillers 20 are turned up around the beads 10, respectively. The fillers 20 are layered over the carcass ply 42. Each filler 20 has: a first end 58 disposed axially inward of the bead 10; and a second end 60 disposed axially outward of the bead 10. Each filler 20 includes multiple cords aligned with each other, and a topping rubber. A material of the cords is steel. The filler 20 is also referred to as a steel filler 20. The fillers 20 can contribute to durability of the tire 2.

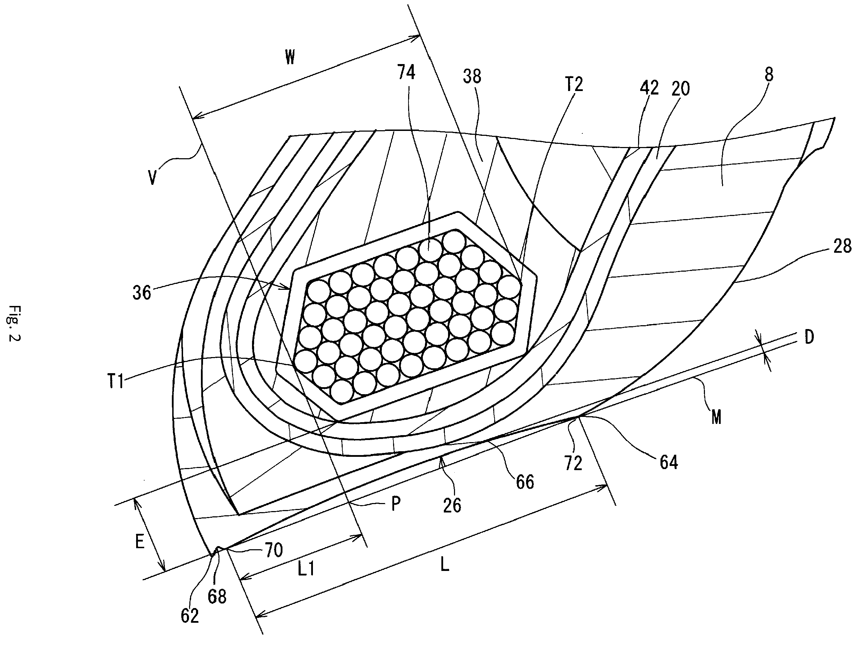

FIG. 2 is an enlarged cross-sectional view of the tire 2 shown in FIG. 1, illustrating a portion near the core 36. In FIG. 2, the up-down direction represents the radial direction, the left-right direction represents the axial direction, and the direction perpendicular to the surface of the drawing sheet represents the circumferential direction. The axially inner end of the bottom surface 26 of each chafer 8 is also referred to as a toe 62 of the bead 10 portion. A boundary portion between the bottom surface 26 and the side surface 28 is also referred to as a heel 64 of the bead 10 portion.

As shown in FIG. 2, the bottom surface 26 is shaped so as to be rounded radially outward from the heel 64 toward the toe 62. That is, the bottom surface 26 includes a depression 66. Further, the bottom surface 26 has a small recess 68 near the toe 62. The width of the small recess 68 is less than or equal to 5% of the width of the bottom surface 26. In FIG. 2, a solid line M represents a straight line that contacts with the bottom surface 26 in the cross-section obtained by cutting the tire 2 at the plane perpendicular to the circumferential direction. In the description herein, "the straight line that contacts with the bottom surface 26" represents a straight line that contacts with the contour of the bottom surface 26 at at least two positions closer to the heel 64 than the small recess 68 is, and that does not intersect the contour of the bottom surface 26. The straight line M that contacts with the bottom surface 26 is referred to as a reference line M. Specifically, the depression 66 is a portion, in the bottom surface 26, which is shaped so as to project radially outward of the reference line M, at a portion which is closer to the heel 64 than the small recess 68 is.

In the tire 2 shown in FIG. 2, the bottom surface 26 includes one small recess 68. The bottom surface 26 may include a plurality of small recesses. When the bottom surface 26 includes the plurality of the small recesses 68, a distance between: the end, on the toe 62 side, of the small recess disposed closest to the toe 62; and the end, on the heel 64 side, of the small recess disposed closest to the heel 64, is less than or equal to 10% of the width of the bottom surface 26. When the bottom surface 26 includes a plurality of the small recesses, the reference line M is a straight line that contacts with the contour of the bottom surface 26 at at least two positions closer to the heel 64 than the small recess closest to the heel 64 is, and that does not intersect the contour of the bottom surface 26. The bottom surface 26 may not have the small recess 68. In this case, the reference line M is a straight line that contacts with the contour of the bottom surface 26 at at least two positions between the toe 62 and the heel 64, and that does not interest the contour of the bottom surface 26.

In FIG. 2, a double-headed arrow L represents the width of the depression 66. The width L is a distance between an end 70, on the toe 62 side, of the depression 66, and an end 72, on the heel 64 side, of the depression 66. In FIG. 2, a double-headed arrow D represents the maximum depth of the depression 66. Specifically, the depth D represents the maximum value of the distance between the reference line M and the bottom surface 26, and the depth D is measured along the straight line orthogonal to the reference line M in the cross-section obtained by cutting the tire 2 at the plane perpendicular to the circumferential direction. When the depression 66 has an arc-shaped cross-section, the depth D is the depth of the depression 66 at a mid-point between both the ends of the depression 66. In the tire 2, a ratio (D/L) of the depth D to the width L is greater than or equal to 0.007 and not greater than 0.060.

FIG. 2 shows a structure of the cross-section of the core 36. As described above, the core 36 includes a non-stretchable wound wire. A plurality of circles shown in FIG. 2 each represent a wire cross-section 74. As shown in FIG. 2, a plurality of lines each including the wire cross-sections 74 aligned almost in the axial direction are stacked. In this example, the number of stacked lines each including the cross-sections 74 is six. When the radially innermost line is defined as a first line, and the lines outward of the first line are a second line and a third line in order, respectively, from the innermost portion toward the outer side, the third line has the maximum number of the cross-sections 74 aligned therein. The number of the cross-sections 74 aligned in the line is reduced toward the radially inner side from the third line. The number of the cross-sections 74 aligned in the line is reduced toward the radially outer side from the third line. Therefore, the core 36 has a hexagonal cross-section. The number of the lines, each including the wire cross-sections 74, which are aligned in the core 36 may not be six. The number of the lines may be less than or equal to five, or may be greater than or equal to seven when the core 36 has a hexagonal cross-section.

Advantageous effects of the present invention will be described below.

When the bead portions are fitted into the rim, the bead portions are moved over the flanges of the rim. At this time, great force is applied to the bead portions. The fillers are sandwiched between the rim, and the cores each having the hexagonal cross-section. Thus, the filler may be bent. When the filler is bent, "waving" is caused by the bottom surface of the bead portion being deformed so as to be wavy. This may cause poor appearance. The tire having the waving generated therein may not be reused. The rubber of the bottom surface of the bead portion may have an increased thickness in order to prevent the waving. When the thickness of the rubber of the bottom surface is increased, the inner diameter (inner diameter of an annular shape formed by the bottom surface of the bead portion) of the bead portion is reduced. In this case, force for fitting the bead portions into the rim is enhanced. Thus, an efficiency of work for fitting the tire into the rim is reduced. Further, when the bead portions are fitted into the rim, the end portion of the bottom surface may be chipped. The inner diameter of the bead core may be increased in order to prevent the waving. In this case, force with which the rim is fastened by the beads is reduced. This may cause slip on rim.

In the tire 2 according to the present invention, the bottom surface 26 (the bottom surface 26 of the bead 10 portion) of the chafer 8 has the depression 66. A ratio (D/L) of the maximum depth D of the depression 66 to the width L of the depression 66 is greater than or equal to 0.007 and not greater than 0.060. The depression 66 allows force for moving the bead 10 portion over the flange 34 of the rim 30 to be effectively reduced. The depression 66 allows bending of the filler 20 to be inhibited. In the tire 2, waving of the bottom surface 26 is inhibited.

In the tire 2, force for moving the bead 10 portion over the flange 34 of the rim 30 is reduced, whereby the bead 10 portions can be easily fitted into the rim 30. Further, in the tire 2, increasing of the thickness of the rubber of the bottom surface 26 portion for inhibiting waving, is unnecessary. In the tire 2, fittability is excellent.

In the tire 2, increasing of the inner diameter of the core 36 of the bead 10 for inhibiting waving, is unnecessary. In the tire 2, resistance to slip on rim is advantageously maintained.

As shown in FIG. 2, in the bottom surface 26 of the chafer 8, a distance between the filler 20 and the bottom surface 26 is reduced. When the distance is excessively reduced, the shape of the filler 20 is expressed as an unevenness on the bottom surface 26. This may cause poor appearance. As described above, in the tire 2, the ratio (D/L) is greater than or equal to 0.007 and not greater than 0.060. In the tire 2, the thickness of the rubber of the bottom surface 26 is appropriately maintained. Thus, the shape of the filler 20 is prevented from being expressed as an unevenness on the bottom surface 26. In the tire 2, poor appearance by the filler 20 is inhibited.

In the tire 2, when the bead 10 portions are fitted into the rim 30, the depression 66 allows the entirety of the bottom surface 26 to be adhered to the seat surface 32 of the rim 30. To the bottom surface 26, pressure is uniformly applied from the rim 30. Partially high pressure is prevented from being applied to the bottom surface 26. This contributes to improvement of durability in the bead 10 portion. In the tire 2, durability is excellent.

The ratio (D/L) is more preferably greater than or equal to 0.010. When the ratio (D/L) is greater than or equal to 0.010, the depression 66 allows force for moving the bead 10 portion over the flange 34 of the rim 30 to be reduced with enhanced effectiveness. The depression 66 allows bending of the filler 20 to be inhibited. In the tire 2, waving of the bottom surface 26 is effectively inhibited. Further, when the ratio (D/L) is greater than or equal to 0.010, the bead 10 portions can be more easily fitted into the rim 30. In the tire 2, fittability is advantageous. The ratio (D/L) is more preferably not greater than 0.050. When the ratio (D/L) is not greater than 0.050, the shape of the filler 20 is prevented from being expressed as an unevenness on the bottom surface 26. In the tire 2, poor appearance by the filler 20 is inhibited.

In FIG. 2, a double-headed arrow W represents the width of the core 36. Specifically, the width W represents the width of the line that has the maximum number of the cross-sections 74 aligned therein, among the lines, in the core 36, each including the wire cross-sections 74. The width W is measured as a length between one end T1 and the other end T2 of the line having the maximum number of the cross-sections 74 aligned therein, along a direction in which the line having the maximum number thereof extends. In the embodiment shown in FIG. 2, the width of the third line is the width W of the core 36. A ratio (L/W) of the width L to the width W is preferably greater than or equal to 0.8. When the ratio (L/W) is greater than or equal to 0.8, the depression 66 allows force for moving the bead 10 portion over the flange 34 of the rim 30 to be reduced with enhanced effectiveness. The depression 66 allows bending of the filler 20 to be inhibited. In the tire 2, waving of the bottom surface 26 is effectively inhibited. Further, the depression 66 allows the bead 10 portions to be more easily fitted into the rim 30. In the tire 2, fittability is advantageous. In this viewpoint, the ratio (L/W) is more preferably greater than or equal to 1.0 and even more preferably greater than or equal to 1.1.

In FIG. 2, a straight line V represents a perpendicular line drawn from the end T1 to the reference line M. A point P of intersection of the perpendicular line V and the reference line M is preferably between both the ends of the depression 66. In other words, the end 70, on the toe 62 side, of the depression 66 is preferably positioned closer to the toe 62 than the core 36 is, in the direction in which the reference line M extends. When the end 70, on the toe 62 side, of the depression 66 is positioned closer to the toe 62 than the core 36 is, the depression 66 allows force for moving the bead 10 portion over the flange 34 of the rim 30 to be reduced with enhanced effectiveness. In the tire 2, waving of the bottom surface 26 is effectively inhibited.

In FIG. 2, a double-headed arrow L1 represents a distance between the point P of intersection and the end 70 (that is, the end on the axially inner side), on the toe 62 side, of the depression 66. A ratio (L1/L) of the distance L1 to the width L is preferably greater than or equal to 0.05. When the ratio (L1/L) is greater than or equal to 0.05, the depression 66 allows force for moving the bead 10 portion over the flange 34 of the rim 30 to be reduced with enhanced effectiveness. In this viewpoint, the ratio (L1/L) is more preferably greater than or equal to 0.10. The ratio (L1/L) is preferably not greater than 0.50.

In FIG. 2, a double-headed arrow E represents a distance between the reference line M and the bottom surface of the core 36. Specifically, the distance E is represented as a minimum value of the distance between the reference line M and the bottom surface of the core 36, and the minimum value of the distance is measured along the straight line perpendicular to the reference line M. A ratio (D/E) of the depth D of the depression 66 to the distance E is preferably greater than or equal to 0.03. When the ratio (D/E) is greater than or equal to 0.03, the depression 66 allows force for moving the bead 10 portion over the flange 34 of the rim 30 to be reduced with enhanced effectiveness. The depression 66 allows bending of the filler 20 to be inhibited. In the tire 2, waving of the bottom surface 26 is effectively inhibited. Further, this allows the bead 10 portions to be more easily fitted into the rim 30. In the tire 2, fittability is advantageous. The ratio (D/E) is preferably not greater than 0.25. When the ratio (D/E) is not greater than 0.25, the shape of the filler 20 is prevented from being expressed as an unevenness on the bottom surface 26. In the tire 2, poor appearance by the filler 20 is inhibited.

As shown in FIG. 2, the depression 66 preferably has an almost arc-shaped cross-section. When the cross-section of the depression 66 is almost arc-shaped, frictional force between the bottom surface 26 and the rim 30 can be reduced. The depression 66 allows the bead 10 portion to be easily moved over the flange 34 of the rim 30. The depression 66 allows bending of the filler 20 to be inhibited. In the tire 2, waving of the bottom surface 26 is inhibited. Further, the depression 66 allows the bead 10 portions to be easily fitted into the rim 30. In the tire 2, fittability is advantageous.

As shown in FIG. 2, the contour of the side surface 28 of the chafer 8 is preferably rounded so as to project axially outward. That is, the side surface 28 of the chafer 8 has no recess. When the side surface 28 is rounded so as to project axially outward, the side surface 28 is adhered to the flange 34. This effectively prevents slip on rim. In the tire 2, slip on rim is prevented.

As shown in FIG. 2, the reference line M, and the radially inner side surface of the core 36 are preferably almost parallel to each other. That the reference line M, and the radially inner side surface of the core 36 are almost parallel to each other means that an absolute value of an angle between the reference line M, and the radially inner side surface of the core 36 is less than or equal to 10°. When the tire 2 is mounted on the rim 30, the rubber of the bottom surface 26 is sandwiched between the core 36 and the seat surface 32 of the rim 30. When the reference line M, and the radially inner side surface of the core 36 are almost parallel to each other, pressure is uniformly applied to the bottom surface 26 from the core 36 and the rim 30. Partially high pressure is prevented from being applied to the bottom surface 26. This contributes to improvement of durability in the bead 10 portion. In the tire 2, durability is excellent.

As described above, the filler 20 includes multiple steel cords aligned with each other. An absolute value α of an angle of each cord relative to the circumferential direction is preferably greater than or equal to 20°. When the filler 20 has cords in which the absolute value α is greater than or equal to 20°, bending of the filler 20 is inhibited in the case of the bead 10 portion being moved over the flange 34 of the rim 30. In the tire 2, waving of the bottom surface 26 is inhibited. Further, the filler 20 in which the absolute value α is greater than or equal to 20°, effectively supports the bead 10. When the bead 10 is under a load, the filler 20 allows deflection of the bead 10 to be inhibited. This contributes to improvement of durability. In the tire 2, durability is advantageous. In this viewpoint, the absolute value α is more preferably greater than or equal to 23°.

The absolute value α is preferably not greater than 70°. As described above, the absolute value θ of the angle of each cord of the carcass ply 42 relative to the equator plane is 75° to 90°. In the tire 2 having the filler 20 in which the absolute value α is greater than 70°, a difference between the absolute value α and the absolute value θ is small. The direction in which the cords of the filler 20 extend and the direction in which the cords of the carcass ply 42 extend may be almost the same. That is, force is applied to the filler 20 and the carcass 12 in almost the same direction. In the tire 2, distortion may be great near the end of the filler 20 or the end of the carcass 12. When the absolute value α is not greater than 70°, distortion in the end of the filler 20 and the end of the carcass 12 is reduced. This contributes to improvement of durability. In the tire 2, durability is advantageous. In this viewpoint, the absolute value α is more preferably not greater than 60°.

A hardness Hs of the chafer 8 is preferably higher than or equal to 65. When the hardness Hs is higher than or equal to 65, influence, by the filler 20, on the shape of the bottom surface 26 can be reduced. The shape of the filler 20 is prevented from being expressed as an unevenness on the bottom surface 26. In the tire 2, outer appearance is advantageously maintained. In this viewpoint, the hardness Hs is preferably higher than or equal to 70.

The hardness Hs is preferably not higher than 85. When the hardness Hs is not higher than 85, the toe 62 can be appropriately deformed in the case of the bead 10 portions being fitted into the rim 30. When the bead 10 portions are fitted into the rim 30, the toe 62 can be inhibited from being caught by the flange 34. This allows the bead 10 portions to be more easily fitted into the rim 30. In the tire 2, fittability is advantageous. Further, when the hardness Hs is not higher than 85, damage to the toe 62 can be prevented in the case of the bead 10 portions being fitted into the rim 30. In this viewpoint, the hardness Hs is more preferably not higher than 80.

In the present invention, the hardness Hs of the chafer 8 is measured by a type A durometer in compliance with the standard of "JIS K6253". The durometer is pressed against the cross-sectional surface shown in FIG. 1, to measure the hardness. The measurement is made at the temperature of 23°C.

In the present invention, the dimensions and angles of the tire 2 and each component of the tire 2 are measured in a state where the tire 2 is mounted on the normal rim 30, and is inflated with air to a normal internal pressure. During the measurement, no load is applied to the tire 2. In the description of the present invention, the normal rim 30 represents the rim 30 which is specified according to the standard with which the tire 2 complies. The "standard rim 30" in the JATMA standard, the "Design Rim" in the TRA standard, and the "Measuring Rim" in the ETRTO standard are included in the normal rim 30. In the description of the present invention, the normal internal pressure represents an internal pressure which is specified according to the standard with which the tire 2 complies. The "maximum air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are included in the normal internal pressure.

### EXAMPLES

### [Example 1]

A tire of Example 1 having the structure shown in FIGS. 1 to 2 was obtained. The size of the tire was 11R22.5. The specifications of the tire are indicated in Table 1. In the tire, the width L of the depression was 24.3 mm, the width W of the core was 16.0 mm, and the distance L1 was 8.5 mm. The depression had an almost arc-shaped cross-section. Further, the distance E between the reference line M and the bottom surface of the core was 7.2 mm. An absolute value θ of an angle of each cord of the carcass ply relative to the equator plane was 90°.

### [Comparative example 1]

A tire of Comparative example 1 was obtained in the same manner as in Example 1 except that the bottom surface of the chafer has no depression.

### [Examples 2 to 3 and Comparative examples 2 to 3]

Tires of Examples 2 to 3 and Comparative examples 2 to 3 were each obtained in the same manner as in Example 1 except that the depth D of the depression was different and the ratio (D/L) had a value indicated in Table 1.

### [Examples 4 to 7]

Tires of Examples 4 to 7 were each obtained in the same manner as in Example 1 except that the absolute value α had a value indicated in Table 2.

### [Examples 8 to 11]

Tires of Examples 8 to 11 were each obtained in the same manner as in Example 1 except that the hardness Hs had a value indicated in Table 3.

### [Fittability]

Mounting of the sample tire on a normal rim (7.50×22.5) and dismounting of the sample tire from the normal rim were performed by using a tire changer. A person who performed this work made a sensory evaluation as to whether or not the tire was easily mounted and dismounted. The results are indicated below in Tables 1 to 3 as an index value based on the value of Example 1. The greater the value is, the better the evaluation is.

### [Resistance to waving]

The tire having been evaluated for the fittability was visually checked for waving in the bottom surface of the chafer. The results are indicated in Tables 1 to 3, and the evaluation is such that "A" represents a case where waving was not generated at all, "B" represents a case where, although generation of waving was found, the waving was generated at a standard level, and "C" represents a case where waving was generated at a level higher than the standard level.

### [Unevenness of shape of filler]

The sample tire was visually checked as to whether or not the shape of the filler was expressed as an unevenness on the bottom surface. The results are indicated in Tables 1 to 3. [Durability]

The sample tire was mounted on a normal rim (7.50×22.5), and inflated with air to an internal pressure of 1000 kPa. The tire was mounted to a drum-type tire testing machine, and a vertical load of 76.93 kN was applied to the tire. Running with the tire on a drum at a speed of 20 km/h was performed. A time until a damage to the bead of the tire was generated, was measured. The results are indicated below in Tables 1 to 3 as an index value based on the value of Example 1. The greater the value is, the better the evaluation is.

**Table 1 Evaluation results**

| | Comparative example 1 | Comparative example 2 | Example 2 | Example 1 | Example 3 | Comparative example 3 |
|---|---|---|---|---|---|---|
| Ratio (D/L) | - | 0.005 | 0.010 | 0.030 | 0.050 | 0.070 |
| Absolute value α [°] | 45 | 45 | 45 | 45 | 45 | 45 |
| Hardness Hs | 75 | 75 | 75 | 75 | 75 | 75 |
| Resistance to waving | C | C | A | A | A | A |
| Fittability | 80 | 85 | 90 | 100 | 110 | 115 |
| Unevenness of shape of filler | none | none | none | none | none | present |
| Durability | 90 | 96 | 98 | 100 | 102 | 104 |

**Table 2 Evaluation results**

| | Example 4 | Example 5 | Example 6 | Example 7 |
|---|---|---|---|---|
| Ratio (D/L) | 0.030 | 0.030 | 0.030 | 0.030 |
| Absolute value α [°] | 15 | 23 | 60 | 75 |
| Hardness Hs | 75 | 75 | 75 | 75 |
| Resistance to waving | B | A | A | A |
| Fittability | 90 | 95 | 105 | 110 |
| Unevenness of shape of filler | none | none | none | none |
| Durability | 90 | 95 | 95 | 85 |

**Table 3 Evaluation results**

| | Example 8 | Example 9 | Example 10 | Example 11 |
|---|---|---|---|---|
| Ratio (D/L) | 0.03 | 0.03 | 0.03 | 0.03 |
| Absolute value α [°] | 45 | 45 | 45 | 45 |
| Hardness Hs | 60 | 70 | 80 | 90 |
| Resistance to waving | A | A | A | A |
| Fittability | 110 | 105 | 90 | 80 |
| Unevenness of shape of filler | none | none | none | none |
| Durability | 90 | 95 | 105 | 110 |

As indicated in Tables 1 to 3, evaluation is higher in the tires of examples than in the tires of comparative examples. The evaluation results clearly indicate that the present invention is superior.

The tire according to the present invention is mounted to vehicles such as trucks and buses.

The foregoing description is in all aspects illustrative, and various modifications can be devised without departing from the essential features of the invention.

## Claims

1. A heavy duty pneumatic tire comprising:
a pair of beads;
a pair of fillers turned up around the beads, respectively; and
a pair of chafers disposed axially outward of the beads, and having radially inner side portions extending radially inward of the beads, wherein
each bead includes a core,
a cross-section obtained by cutting the core at a plane perpendicular to a circumferential direction, is hexagonal,
each filler has multiple cords made of steel and aligned with each other,
an outer surface of each chafer has a bottom surface that contacts with a seat surface of a rim when the tire is mounted on the rim, and a side surface that contacts with a flange of the rim when the tire is mounted on the rim,
when a reference line M represents a straight line that contacts with the bottom surface in a cross-section obtained by cutting the tire at the plane perpendicular to the circumferential direction,
the bottom surface has a depression that is shaped so as to project radially outward of the reference line M, and
a ratio (D/L) of a maximum depth D of the depression to a width L of the depression is greater than or equal to 0.007 and not greater than 0.060.

2. The tire according to claim 1, wherein a ratio (L/W) of the width L to a width W of the core is greater than or equal to 0.8.

3. The tire according to claim 1, wherein a perpendicular line that is drawn from an axially inner end of the core to the reference line M intersects the reference line M between both ends of the depression.

4. The tire according to claim 1, wherein an absolute value α of an angle of each cord of the fillers relative to the circumferential direction is greater than or equal to 20° and not greater than 70°.

5. The tire according to claim 1, wherein a hardness Hs of the chafers is higher than or equal to 65 and not higher than 85.
